# EUROPEAN PATENT APPLICATION

(11) **EP 4 786 336 A1**
(43) Date of publication of application: **05.08.2026**
(21) Application number: 26155855.5
(22) Date of filing: 02.02.2026
(51) Int. Cl.: B64D 27/40, B64C 3/32, B64D 27/12

(54) **ANGLED PYLON STRUCTURE FOR OPEN ROTOR PROPULSION SYSTEM**

(30) Priority: 31.01.2025 US 202519042879
(71) Applicant: RTX Corporation, Farmington, CT 06032 (US)
(72) Inventor: MORTON, Jeffrey T., Manchester, 06040 (US); YAZICI, Murat, Glastonbury, 06033 (US)
(74) Representative: Dehns

(57) **Abstract**

A system is provided for an aircraft (20). This aircraft system includes an aircraft propulsion system (24) and a pylon structure (144). The aircraft propulsion system (24) includes a housing structure (90), an open propulsor rotor (66) and a turbine engine (64). The turbine engine (64) is configured to drive rotation of the open propulsor rotor (66). The turbine engine (64) includes an engine centerline and an engine core (114) that is housed within the housing structure (90). The pylon structure (144) is mounted to the aircraft propulsion system (24) and projects longitudinally along a pylon centerline (146) away from the aircraft propulsion system (24). The pylon centerline (146) is circumferentially offset from a reference point (158) about the engine centerline (54) by a first offset angle (160). The reference point (158) is disposed at a top-dead-center location (152) of the housing structure (90). The first offset angle (160) is a non-zero acute angle.

## Description

### BACKGROUND OF THE INVENTION

### 1. Technical Field

This invention relates generally to an aircraft and, more particularly, to a pylon structure for an aircraft propulsion system.

### 2. Background Information

Various types and configurations of aircraft propulsion systems are known in the art including those with one or more open propulsor rotors. Various pylon structures are also known in the art for mounting an aircraft propulsion system to an airframe. While these known aircraft propulsion systems and pylon structures have various benefits, there is still room in the art for improvement.

### SUMMARY OF THE INVENTION

According to an aspect of the present invention, a system is provided for an aircraft. This aircraft system includes an aircraft propulsion system and a pylon structure. The aircraft propulsion system includes a housing structure, an open propulsor rotor and a turbine engine. The turbine engine is configured to drive rotation of the open propulsor rotor. The turbine engine includes an engine centerline and an engine core that is housed within the housing structure. The pylon structure is mounted to the aircraft propulsion system and projects longitudinally along a pylon centerline away from the aircraft propulsion system. The pylon centerline is circumferentially offset from a reference point about the engine centerline by a first offset angle. The reference point is disposed at a top-dead-center location of the housing structure. The first offset angle is a non-zero acute angle.

According to another aspect of the present invention, another system is provided for an aircraft. This aircraft system includes an aircraft airframe, an aircraft propulsion system and a pylon structure. The aircraft airframe includes a roll axis, a pitch axis, a yaw axis and an aircraft wing. The aircraft propulsion system includes an open propulsor rotor and a turbine engine. The turbine engine includes an engine centerline and is configured to drive rotation of the open propulsor rotor. The pylon structure mounts the aircraft propulsion system to the aircraft wing. The pylon structure extends longitudinally along a pylon centerline from the aircraft propulsion system to the aircraft wing. The pylon centerline is angularly offset from the yaw axis by a first offset angle in a reference plane perpendicular to the engine centerline. The first offset angle is greater than ten degrees and less than ninety degrees.

According to another aspect of the present invention, another system is provided for an aircraft. This aircraft system includes an aircraft airframe, an aircraft propulsion system and a pylon structure. The aircraft airframe includes an aircraft wing with an exterior surface. The aircraft propulsion system includes an open propulsor rotor and a turbine engine. The turbine engine includes an engine centerline. The turbine engine is configured to drive rotation of the open propulsor rotor. The pylon structure mounts the aircraft propulsion system to the aircraft wing. The pylon structure extends longitudinally along a pylon centerline from the aircraft propulsion system to the exterior surface at an interface between the pylon structure and the aircraft wing. The pylon centerline is angularly offset from the exterior surface at the interface by a first offset angle in a reference plane perpendicular to the engine centerline. The first offset angle is greater than five degrees and less than ninety degrees.

The following optional features may be applied to any of the above aspects.

The aircraft airframe may also include a roll axis, a pitch axis and a yaw axis. The pylon centerline may be angularly offset from the yaw axis by a second offset angle in the reference plane that is greater than ten degrees and less than ninety degrees.

The first offset angle may be equal to or greater than twenty degrees.

The first offset angle may be equal to or less than sixty degrees.

The pylon structure may be configured to pivot between a first position and a second position. The pylon centerline may be angularly offset from the yaw axis by the first offset angle when the pylon structure is in the first position.

The pylon centerline may be substantially vertical when the pylon structure is in the second position.

The first offset angle may be equal to or greater than ten degrees.

The first offset angle may be equal to or less than seventy degrees.

The first offset angle may be between twenty degrees and sixty degrees.

The open propulsor rotor may be upstream of the pylon structure.

The aircraft propulsion system may also include an open guide vane structure next to the open propulsor rotor.

The system may also include an airframe component. The pylon structure may mount the aircraft propulsion system to the airframe component.

The airframe component may include an exterior surface. The pylon structure may project longitudinally along the pylon centerline to the exterior surface at an interface between the pylon structure and the airframe component. The pylon centerline may be angularly offset from the exterior surface at the interface by a second offset angle in a reference plane perpendicular to the engine centerline. The second offset angle may be a non-zero acute angle.

The second offset angle may be between ten degrees and seventy degrees.

The engine core may be disposed vertically below the airframe component relative to a vertically extending yaw axis of the aircraft.

The airframe component may be configured as an aircraft wing.

A section of a span line of the aircraft wing may overlap the aircraft propulsion system. The section of the span line of the aircraft wing may be straight in a reference plane perpendicular to the engine centerline.

A section of a span line of the aircraft wing may overlap the aircraft propulsion system. At least a portion of the section of the span line of the aircraft wing may be non-straight in a reference plane perpendicular to the engine centerline.

The aircraft wing may be configured as or otherwise include a gull wing.

The system may also include an aircraft fuselage having a vertical height in a plane of rotation of the open propulsor rotor. The aircraft wing may be connected to and project spanwise out from a lateral side of the aircraft fuselage. The open propulsor rotor may have an outer diameter that is equal to or greater than the vertical height.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a perspective illustration of an aircraft with multiple propulsion systems mounted to wings of the aircraft.
FIG. 2 is a schematic illustration of an exemplary one of the propulsion systems.
FIG. 3 is a schematic illustration of a portion of the propulsion system of FIG. 2 at a propulsion section.
FIG. 4 is a front end view illustration of the aircraft.
FIG. 5 is a front end view illustration of a portion of the aircraft at one of the propulsion systems configured with an angle pylon structure.
FIG. 6 is a front end view illustration of a portion of another aircraft at a propulsion system configured with a vertical pylon structure.
FIGS. 7A-C are schematic illustrations of various fuselage arrangements with the propulsion systems.
FIG. 8 is a front end view illustration of a portion of the aircraft with a gull wing arrangement.
FIG. 9 is a front end view illustration of a portion of the aircraft with a straight wing arrangement.
FIGS. 10A and 10B are front end view illustrations of a portion of the aircraft with a moveable pylon structure in various positions.

### DETAILED DESCRIPTION

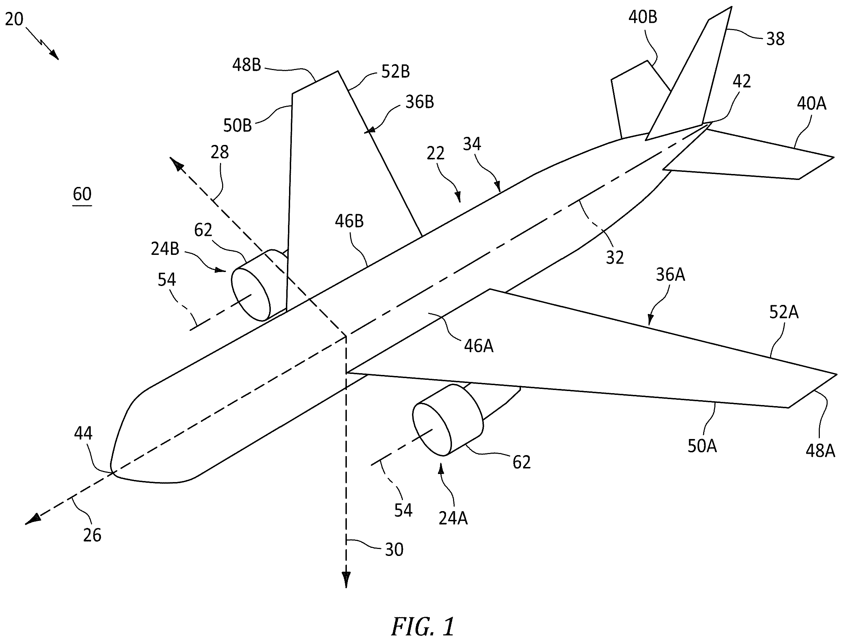

FIG. 1 is a perspective schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22 and one or more aircraft propulsion systems 24A and 24B (generally referred to as "24"); e.g., a pair of companion aircraft propulsion systems. The aircraft 20 and its aircraft airframe 22 have a roll axis 26, a pitch axis 28 and a yaw axis 30. The roll axis 26 and the pitch axis 28 of FIG. 1 lay in and define a horizontal aircraft plane. This horizontal aircraft plane may be completely or substantially (e.g., within 5-10°) parallel with a horizon line and/or completely or substantially (e.g., within 5-10°) perpendicular to a force of gravity when, for example, the aircraft 20 is flying in (or close to) level flight and/or the aircraft 20 is on ground. The roll axis 26 of FIG. 1 is a longitudinally extending axis that may be parallel (e.g., coaxial) with, or slightly angularly offset (e.g., by less than 5° or 10°) vertically up or down from, a longitudinal centerline 32 of the aircraft 20 and its aircraft airframe 22. The pitch axis 28 of FIG. 1 is a laterally extending axis that is perpendicular to the roll axis 26. The yaw axis 30 of FIG. 1 is a vertically extending axis that is perpendicular to the roll axis 26 and the pitch axis 28 and, thus, perpendicular to the horizontal plane.

The aircraft airframe 22 of FIG. 1 includes an aircraft fuselage 34 and one or more aircraft wings 36A and 36B (generally referred to as "36"). This aircraft airframe 22 may also include one or more aircraft stabilizers, such as at least one vertical stabilizer 38 and one or more horizontal stabilizers 40A and 40B arranged at (e.g., on, adjacent or proximate) an aft, downstream tail end 42 of the aircraft fuselage 34. However, in other embodiments, it is contemplated one or more of the aircraft stabilizers 38, 40A and/or 40B may be omitted.

The aircraft fuselage 34 extends longitudinally along the aircraft centerline 32 from a forward, upstream nose end 44 of the aircraft airframe 22 and its aircraft fuselage 34 to the fuselage tail end 42. The aircraft fuselage 34 extends laterally between and to opposing lateral sides 46A and 46B (generally referred to as "46") of the aircraft fuselage 34.

The aircraft wings 36A and 36B are arranged to the opposing lateral sides 46A and 46B of the aircraft fuselage 34. The first aircraft wing 36A of FIG. 1, for example, is connected to the aircraft fuselage 34 at the fuselage first side 46A. The second aircraft wing 36B is connected to the aircraft fuselage 34 at the fuselage second side 46B. The aircraft fuselage 34 of FIG. 1 is thereby located laterally between the first aircraft wing 36A and the second aircraft wing 36B. Each of these aircraft wings 36A and 36B projects spanwise out from the aircraft fuselage 34 to a tip 48A, 48B of the respective aircraft wing 36A, 36B. Each of the aircraft wings 36A and 36B extends longitudinally between and to a leading edge 50A, 50B of the respective aircraft wing 36A, 36B and a trailing edge 52A, 52B of the respective aircraft wing 36A, 36B.

The aircraft propulsion systems 24A and 24B of FIG. 1 are mounted to the aircraft airframe 22 and arranged to the opposing lateral sides 46A and 46B of the aircraft fuselage 34. The first aircraft propulsion system 24A of FIG. 1, for example, is mounted to the first aircraft wing 36A. The second aircraft propulsion system 24B is mounted to the second aircraft wing 36B. The aircraft fuselage 34 of FIG. 1 is thereby located laterally between the first aircraft propulsion system 24A and the second aircraft propulsion system 24B.

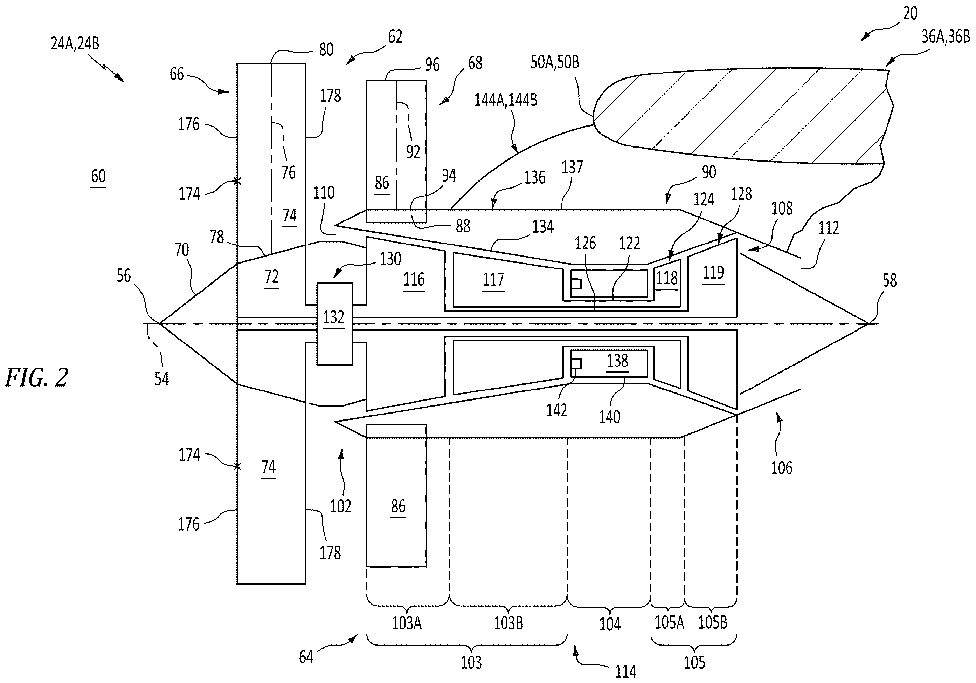

Referring to FIG. 2, each aircraft propulsion system 24 extends axially along an axis 54 between an upstream, forward end 56 of the aircraft propulsion system 24 and a downstream, aft end 58 of the aircraft propulsion system 24. The propulsion system axis 54 may be a centerline axis of the respective aircraft propulsion system 24 and/or a centerline axis of one or more members of the respective aircraft propulsion system 24. The propulsion system axis 54 may also or alternatively be a rotational axis of one or more members of the respective aircraft propulsion system 24.

Each aircraft propulsion system 24 may be configured as an open rotor propulsion system with a single open rotor and swirl recovery vane (SRV) architecture. Herein, the term "open" may describe a propulsion system section and/or a propulsion system component which is open to an environment 60 (e.g., an ambient environment) external to the aircraft propulsion system 24 and, more generally, the aircraft 20. The aircraft propulsion system 24 of FIG. 2, for example, includes an open rotor propulsion section 62 and a gas turbine engine 64. Here, the propulsion system axis 54 may be an axial centerline and/or a rotational axis for the propulsion section 62 and/or the turbine engine 64. The present invention, however, is not limited to such an exemplary arrangement as described below in further detail.

The propulsion section 62 of FIG. 2 includes an open propulsor rotor 66 and an open guide vane structure 68. These propulsion section members 66 and 68 are un-ducted components of the aircraft propulsion system 24 and its propulsion section 62. The propulsion section 62 of FIG. 2 also includes a nose cone 70 disposed at (e.g., on, adjacent or proximate) the propulsion system forward end 56. Briefly, this nose cone 70 may be configured as a spinner which is rotatable with the propulsor rotor 66 about the propulsion system axis 54. Alternatively, the nose cone 70 may be configured as a stationary structure of the propulsion section 62.

The propulsor rotor 66 includes a rotor base 72 (e.g., a disk or a hub) and a plurality of open propulsor blades 74 (e.g., airfoils). The propulsor blades 74 are arranged and may be equispaced circumferentially about the rotor base 72 and the propulsion system axis 54 in an array; e.g., a circular array. This propulsor blade array may be unshrouded or alternatively shrouded by a tubular propulsor rotor shroud dedicated to the propulsor rotor 66 for example. The propulsor blade array and, more generally, the propulsor rotor 66 may include a total number of nine (9) or more (e.g., twelve (12) or more) of the propulsor blades 74. Each of the propulsor blades 74 is connected to (e.g., formed integral with or otherwise attached to) the rotor base 72. Each of the propulsor blades 74 projects spanwise along a span line 76 of the respective propulsor blade 74 (e.g., radially relative to the propulsion system axis 54) out from an exterior surface 78 of the rotor base 72, into the external environment 60, to a distal tip 80 of the respective propulsor blade 74. Each propulsor blade 74 is thereby configured as an un-ducted propulsor blade which is exposed to (e.g., disposed in) the surrounding external environment 60.

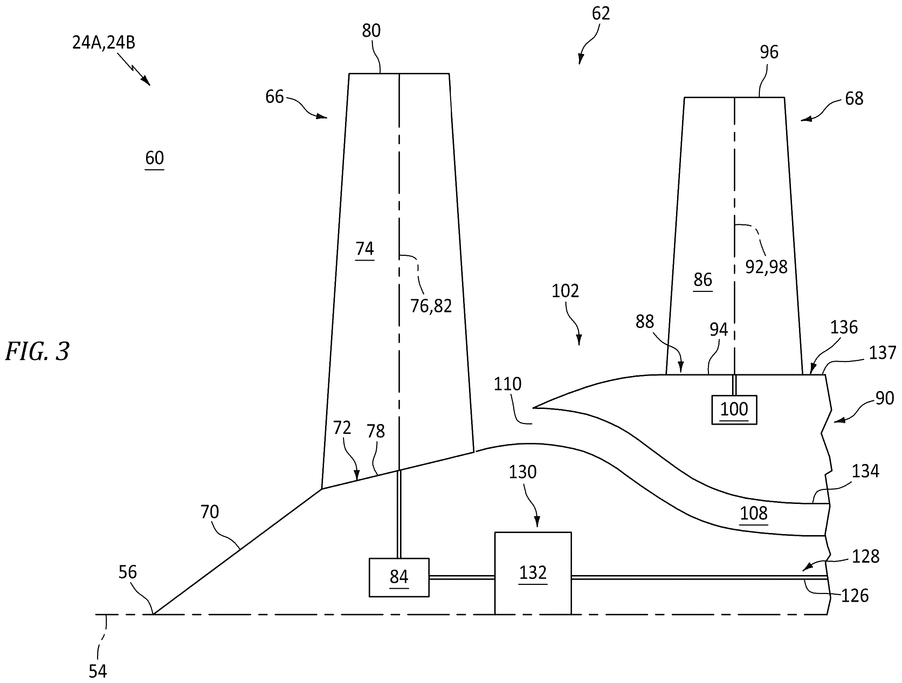

Referring to FIG. 3, each propulsor blade 74 may be configured to pivot about a respective blade pivot axis 82. This blade pivot axis 82 may generally extend radially relative to the propulsion system axis 54. Each propulsor blade 74 of FIG. 3 is operatively coupled with a blade actuation system 84. This blade actuation system 84 is configured to pivot each propulsor blade 74 about its respective blade pivot axis 82. By pivoting each propulsor blade 74 about its blade pivot axis 82, a pitch of the respective propulsor blade 74 may be changed. Of course, it is contemplated some or all of the propulsor blades 74 may be alternatively moved to change the propulsor blade pitch. Moreover, it is contemplated some or all of the propulsor blades 74 may alternatively be fixed pitch propulsor blades in other embodiments.

The guide vane structure 68 of FIG. 2 includes a plurality of open exit guide vanes 86 (e.g., airfoils) that are arranged and may be equispaced circumferentially about the propulsion system axis 54 in an array; e.g., a circular array. This guide vane array may be unshrouded or alternatively shrouded by a tubular guide vane shroud dedicated to the guide vane structure 68 for example. The guide vane structure 68 and its guide vanes 86 are arranged axially next to (e.g., adjacent) the propulsor rotor 66 and its propulsor blades 74. The guide vane structure 68 and its guide vanes 86 of FIG. 2, for example, are arranged downstream of the propulsor rotor 66 and its propulsor blades 74, without (e.g., any) other elements axially therebetween to obstruct, turn and/or otherwise influence the air propelled by the propulsor rotor 66 to the guide vane structure 68 for example. Each of the guide vanes 86 of FIG. 2 is coupled to a support structure 88 of a stationary housing structure 90 for the aircraft propulsion system 24. This support structure 88 may be configured as or otherwise include a support frame, a case and/or another fixed structure of the housing structure 90. Each of the guide vanes 86 projects spanwise along a span line 92 of the respective guide vane 86 (e.g., radially relative to the propulsion system axis 54) out from an exterior surface 94 of the housing structure 90, into the external environment 60, to a distal tip 96 of the respective guide vane 86. Here, the exterior surface 94 radially borders the external environment 60 and forms an exterior aerodynamic flow surface of the aircraft propulsion system 24. Each guide vane 86 is thereby configured as an un-ducted guide vane which is exposed to (e.g., disposed in) the surrounding external environment 60.

Referring to FIG. 3, each guide vane 86 may be configured to pivot about a respective vane pivot axis 98. This vane pivot axis 98 may generally extend radially relative to the propulsion system axis 54. Each guide vane 86 of FIG. 3 is operatively coupled with a vane actuation system 100. This vane actuation system 100 may be discrete from or integrated as a functional part of the blade actuation system 84. The vane actuation system 100 is configured to pivot each guide vane 86 about its respective vane pivot axis 98. By pivoting each guide vane 86 about its vane pivot axis 98, a pitch of the respective guide vane 86 may be changed. Of course, it is contemplated some or all of the guide vanes 86 may be alternatively moved to change the guide vane pitch. Moreover, it is contemplated some or all of the guide vanes 86 may alternatively be fixed pitch guide vanes in other embodiments.

Referring to FIG. 2, the turbine engine 64 includes an inlet section 102, a compressor section 103, a combustor section 104, a turbine section 105 and an exhaust section 106. The compressor section 103 of FIG. 2 includes a low pressure compressor (LPC) section 103A and a high pressure compressor (HPC) section 103B. The turbine section 105 of FIG. 2 includes a high pressure turbine (HPT) section 105A and a low pressure turbine (LPT) section 105B. The turbine engine 64 also includes an (e.g., annular) engine flowpath 108 which extends longitudinally through the aircraft propulsion system 24 of FIG. 2 and its turbine engine 64 from an airflow inlet 110 into the engine flowpath 108 to a combustion products exhaust 112 from the engine flowpath 108. The flowpath inlet 110 is also an airflow inlet into the aircraft propulsion system 24 of FIG. 2 and its turbine engine 64. The flowpath exhaust 112 is also a combustion products exhaust from the aircraft propulsion system 24 of FIG. 2 and its turbine engine 64. At least (or only) the LPC section 103A, the HPC section 103B, the combustor section 104, the HPT section 105A and the LPT section 105B collectively form a core 114 (e.g., a gas generator) of the turbine engine 64.

The LPC section 103A includes a bladed low pressure compressor (LPC) rotor 116. The HPC section 103B includes a bladed high pressure compressor (HPC) rotor 117. The HPT section 105A includes a bladed high pressure turbine (HPT) rotor 118. The LPT section 105B includes a bladed low pressure turbine (LPT) rotor 119. Each of these bladed rotors 116-119 may be a ducted and/or shrouded engine rotor. Each of the engine rotors 116-119 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 108. Each of the rotor blades is connected to the respective rotor base. Each of the rotor blades projects radially (e.g., spanwise) out from the respective rotor base into the engine flowpath 108 and to a distal tip of the respective rotor blade.

The HPC rotor 117 is coupled to and rotatable with the HPT rotor 118. The HPC rotor 117 of FIG. 2, for example, is connected to the HPT rotor 118 by a high speed shaft 122. At least (or only) the HPC rotor 117, the HPT rotor 118 and the high speed shaft 122 collectively form a high speed rotating structure 124; e.g., a high speed spool of the turbine engine 64 and its engine core 114. This high speed rotating structure 124 of FIG. 2 and its members 117, 118 and 122 are rotatable about the propulsion system axis 54. However, in other embodiments, the high speed rotating structure 124 and its members 117, 118 and 122 may alternatively be rotatable about another rotational axis (e.g., the engine centerline) which is (e.g., radially and/or angularly) offset from the rotational axis of the propulsor rotor 66.

The LPC rotor 116 is coupled to and rotatable with the LPT rotor 119. The LPC rotor 116 of FIG. 2, for example, is connected to the LPT rotor 119 by a low speed shaft 126. At least (or only) the LPC rotor 116, the LPT rotor 119 and the low speed shaft 126 collectively form a low speed rotating structure 128; e.g., a low speed spool of the turbine engine 64 and its engine core 114. This low speed rotating structure 128 of FIG. 2 and its members 116, 119 and 126 are rotatable about the propulsion system axis 54. However, in other embodiments, the low speed rotating structure 128 and its members 116, 119 and 126 may alternatively be rotatable about another rotational axis (e.g., the engine centerline) which is (e.g., radially and/or angularly) offset from the rotational axis of the propulsor rotor 66.

The low speed rotating structure 128 is coupled to the propulsor rotor 66 through a drivetrain 130. This drivetrain 130 may be configured as a geared drivetrain, where a geartrain 132 (e.g., a transmission, a speed change device, an epicyclic geartrain, etc.) is disposed between and operatively couples the propulsor rotor 66 to the low speed rotating structure 128 and its LPT rotor 119. With this arrangement, the propulsor rotor 66 may rotate at a different (e.g., slower) rotational speed than the low speed rotating structure 128 and its LPT rotor 119. Here, the propulsor rotor 66 and the low speed rotating structure 128 may rotate in a common (the same) direction about the propulsion system axis 54 or in opposite directions about the propulsion system axis 54 depending, for example, upon the specific configuration of the geartrain 132. Alternatively, the drivetrain 130 may be configured as a direct-drive drivetrain, where the geartrain 132 is omitted. With such an arrangement, the propulsor rotor 66 rotates at a common (the same) rotational speed as the low speed rotating structure 128 and its LPT rotor 119.

The engine sections 102-106 of FIG. 2 are arranged sequentially along the propulsion system axis 54 and are housed within and/or formed by the housing structure 90. This housing structure 90 includes an engine case 134 (e.g., a gas generator case) and a nacelle 136. The engine case 134 houses one or more of the engine sections 103A-105B; e.g., the engine core 114. The engine case 134 of FIG. 2, for example, extends axially along (e.g., axially overlaps) and extends circumferentially about (e.g., circumscribes) the engine sections 103A-105B and the bladed rotors 116-119. The engine case 134 may also house the geartrain 132. The nacelle 136 houses and provides an aerodynamic cover over the engine case 134. An exterior wall 137 of the nacelle 136 of FIG. 2, for example, is disposed radially outboard of, extends axially along (e.g., axially overlaps) and extends circumferentially about (e.g., circumscribes) the engine core 114 and its engine case 134. This nacelle wall 137 may at least partially or completely form the exterior surface 94. With the foregoing arrangement, the bladed rotors 116-119 are disposed within the housing structure 90. By contrast, the propulsor rotor 66 and the guide vane structure 68 are disposed at least partially (or completely) outside of the housing structure 90.

During operation of the aircraft propulsion system 24 of FIG. 2, ambient air within the external environment 60 is propelled by the rotating propulsor rotor 66 in the downstream, aft direction towards the propulsion system aft end 58. A major portion (e.g., more than 50%) of this air bypasses the turbine engine 64 to provide forward thrust while a minor portion (e.g., less than 50%) of the air flows into the turbine engine 64. For example, an outer stream of the air propelled by the rotating propulsor rotor 66 flows axially across the guide vane structure 68 and outside of the housing structure 90 and its exterior surface 94; e.g., along an exterior of the nacelle 136. The guide vane structure 68 conditions (e.g., straightens out, deswirls, etc.) the outer stream of air within the external environment 60 to enhance the forward thrust. By contrast, an inner stream of the air propelled by the rotating propulsor rotor 66 may bypass the guide vane structure 68 and enter the turbine engine 64 and its engine flowpath 108 through the flowpath inlet 110. The air entering the engine flowpath 108 through the flowpath inlet 110 may be referred to as "core air".

The core air is compressed by the LPC rotor 116 and the HPC rotor 117 and directed into a combustion chamber 138 (e.g., an annular combustion chamber) of a combustor 140 (e.g., an annular combustor) in the combustor section 104. Fuel is injected into the combustion chamber 138 by one or more fuel injectors 142 and mixed with the compressed core air to provide a fuel-air mixture. This fuel-air mixture is ignited and combustion products thereof flow through and sequentially drive rotation of the HPT rotor 118 and the LPT rotor 119. The rotation of the HPT rotor 118 and the LPT rotor 119 respectively drive rotation of the HPC rotor 117 and the LPC rotor 116 and, thus, compression of the core air. The rotation of the LPT rotor 119 also drives the rotation of the propulsor rotor 66 through the drivetrain 130. The turbine engine 64 and its low speed rotating structure 128 thereby power operation of (e.g., drive rotation of) the propulsor rotor 66 through the drivetrain 130 during aircraft propulsion system operation.

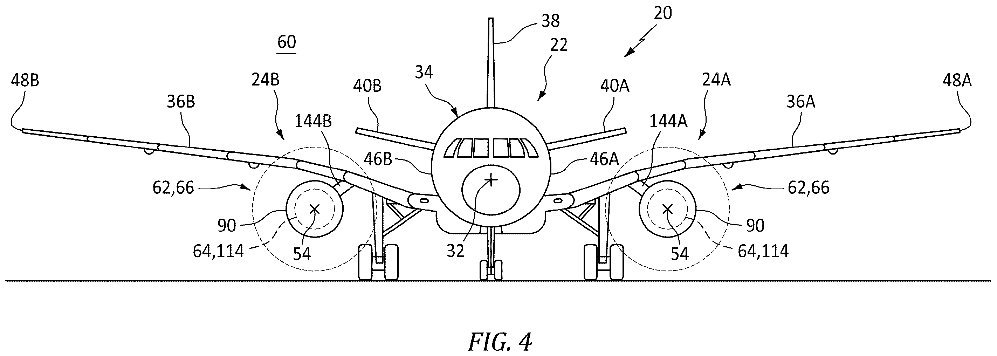

Referring to FIG. 4, each aircraft propulsion system 24 may be mounted to the aircraft airframe 22 under wing. Each aircraft propulsion system 24A, 24B of FIG. 4, for example, is mounted to a respective one of the aircraft wings 36A, 36B by a respective pylon structure 144A, 144B (generally referred to as "144") with the propulsion system members 64, 90, 114 (see FIG. 2) located at least partially or completely vertically below the respective aircraft wings 36A, 36B. For ease of description, features of each pylon structure 144 may be described below with reference to the first pylon structure 144A. The second pylon structure 144B, however, may also include one, some or all of those same first pylon structure features. The second pylon structure 144B of FIG. 4, for example, has a mirror image configuration to the first pylon structure 144A.

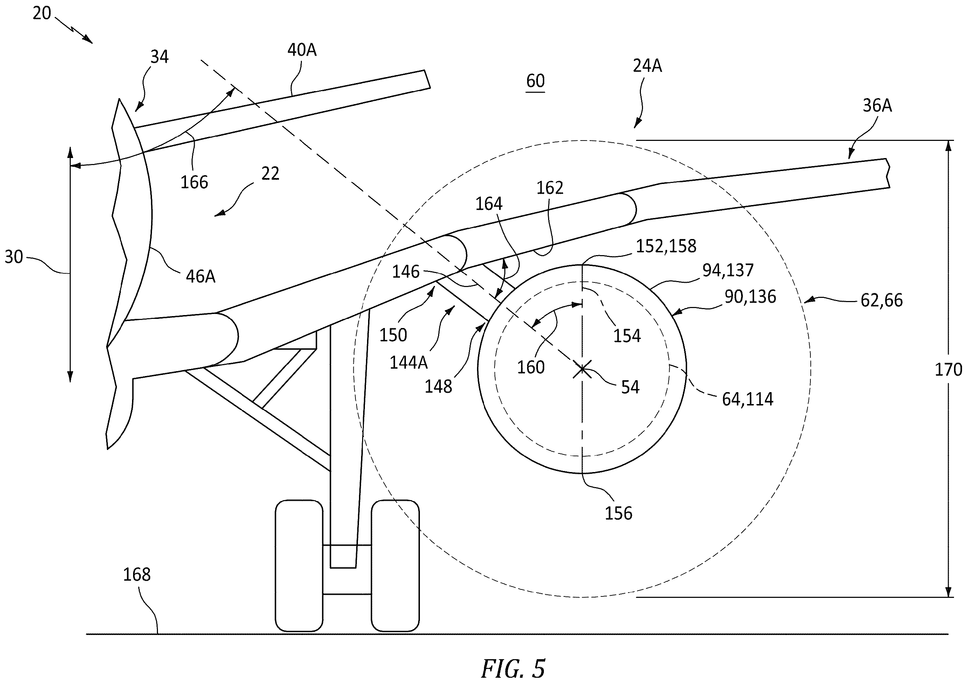

Referring to FIG. 5, the first pylon structure 144A extends longitudinally along a longitudinal centerline 146 of the first pylon structure 144A through the external environment 60 from the first aircraft propulsion system 24A to the first aircraft wing 36A. The first pylon structure 144A meets the first aircraft propulsion system 24A and its housing structure 90 at a pylon-propulsion system interface 148. The first pylon structure 144A meets the aircraft airframe 22 and its first aircraft wing 36A at a pylon-wing interface 150.

At the pylon-propulsion system interface 148, the first pylon structure 144A projects longitudinally along the pylon centerline 146 out from the housing structure 90 and its exterior surface 94 in a first direction. This first direction of FIG. 5 extends (a) vertically upward relative to the vertically extending yaw axis 30 (e.g., in a direction opposite gravity) and (b) laterally inboard towards the aircraft fuselage 34 relative to the laterally extending pitch axis 28 (see FIG. 1). The first direction of FIG. 5 also extends radially outward relative to the respective propulsion system axis 54.

The pylon-propulsion system interface 148 may be disposed circumferentially to a side (e.g., an inboard side relative to the aircraft fuselage 34) of a top-dead-center location 152 of the first aircraft propulsion system 24A and its housing structure 90. Briefly, at this top-dead-center location 152, a ray 154 projecting radially outward from the respective propulsion system axis 54 is parallel with the vertically extending yaw axis 30; e.g., the ray 154 is completely vertical. Moreover, the top-dead-center location 152 is disposed vertically above a bottom-dead-center location 156 of the first aircraft propulsion system 24A and its housing structure 90 when, for example, the aircraft 20 is flying in (or close to) level flight and/or the aircraft 20 is on ground. With the pylon-propulsion system interface 148 disposed circumferentially to the side of the top-dead-center location 152, the pylon centerline 146 of FIG. 5 is circumferentially offset from a reference point 158 at, or otherwise vertically aligned with, the top-dead-center location 152 by a pylon-propulsion system offset angle 160. This pylon-propulsion system offset angle 160 is a non-zero acute angle. The pylon-propulsion system offset angle 160, for example, may be equal to or greater than five degrees (5°) or ten degrees (10°). The pylon-propulsion system offset angle 160 may be equal to or less than eighty degrees (80°) or seventy degrees (70°). In particular, the pylon-propulsion system offset angle 160 may be between twenty degrees (20°) and sixty degrees (60°) inclusive and, more particularly, between thirty degrees (30°) and fifty degrees (50°) inclusive.

The first pylon structure 144A and its pylon centerline 146 may be arranged perpendicular to the housing structure 90 and its exterior surface 94 at (or about) the pylon-propulsion system interface 148. Alternatively, the first pylon structure 144A and its pylon centerline 146 may be angularly offset from the housing structure 90 and its exterior surface 94 at (or about) the pylon-propulsion system interface 148 by an acute angle greater than, for example, seventy degrees (70°) or eighty degrees (80°). Such embodiments may be particularly useful where, for example, the exterior surface 94 has a non-circular cross-sectional geometry in a reference plane perpendicular to the respective propulsion system axis 54; e.g., the plane of FIG. 5.

At the pylon-wing interface 150, the first pylon structure 144A projects longitudinally along the pylon centerline 146 out from the first aircraft wing 36A and an exterior surface 162 (e.g., a bottom exterior surface) of the first aircraft wing 36A in a second direction. This second direction may be opposite the first direction. The second direction of FIG. 5, for example, extends (a) vertically downward relative to the vertically extending yaw axis 30 (e.g., in a direction with gravity) and (b) laterally outboard away from the aircraft fuselage 34 relative to the laterally extending pitch axis 28 (see FIG. 1). The second direction of FIG. 5 also extends radially inward relative to the respective propulsion system axis 54.

The first pylon structure 144A and its pylon centerline 146 of FIG. 5 are angularly offset from the first aircraft wing 36A and its exterior surface 162 by a pylon-wing offset angle 164 in the reference plane; e.g., the plane of FIG. 5. This pylon-wing offset angle 164 is a non-zero acute angle. The pylon-wing offset angle 164, for example, may be equal to or greater than five degrees (5°) or ten degrees (10°). The pylon-wing offset angle 164 may be equal to or less than eighty degrees (80°) or seventy degrees (70°). In particular, the pylon-wing offset angle 164 may be between twenty degrees (20°) and sixty degrees (60°) inclusive and, more particularly, between thirty degrees (30°) and fifty degrees (50°) inclusive. Alternatively, the first pylon structure 144A and its pylon centerline 146 may be arranged perpendicular to the first aircraft wing 36A and its exterior surface 162. Such embodiments may be particularly useful where, for example, the first aircraft wing 36A has a gull wing configuration and the pylon-wing offset angle 164 is disposed along a relatively steep bend along a span of the first aircraft wing 36A.

The first pylon structure 144A and its pylon centerline 146 of FIG. 5 are also angularly offset from the vertically extending yaw axis 30 by a pylon-vertical offset angle 166 in the reference plane; e.g., the plane of FIG. 5. This pylon-vertical offset angle 166 is a non-zero acute angle. The pylon-vertical offset angle 166, for example, may be equal to or greater than five degrees (5°) or ten degrees (10°). The pylon-vertical offset angle 166 may be equal to or less than eighty degrees (80°) or seventy degrees (70°). In particular, the pylon-vertical offset angle 166 may be between twenty degrees (20°) and sixty degrees (60°) inclusive and, more particularly, between thirty degrees (30°) and fifty degrees (50°) inclusive.

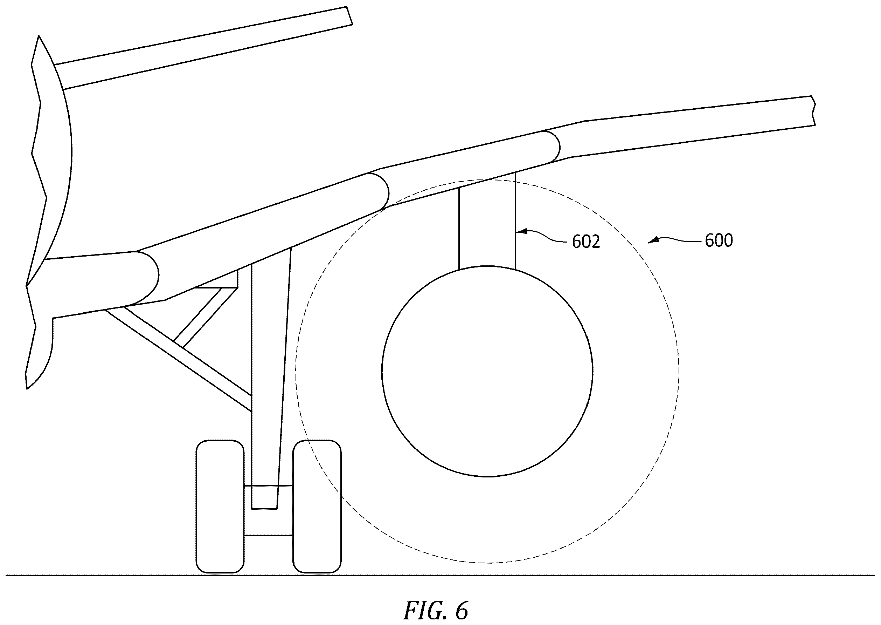

With the foregoing arrangement, when the aircraft 20 is on ground, the first aircraft propulsion system 24A is shifted vertically upward closer to the first aircraft wing 36A and away from a ground surface 168. This vertical shift is particularly noticeable when compared to an aircraft propulsion system 600 with a vertical pylon structure 602 as shown in FIG. 6. Referring again to FIG. 5, by shifting the first aircraft propulsion system 24A vertically upward, additional ground clearance for the propulsor rotor 66 is provided. This additional ground clearance may be utilized to position the propulsor rotor 66 farther away from the ground surface 168 to reduce likelihood of foreign object damage (FOD) to the propulsor rotor 66 when the aircraft 20 is taxiing, taking off and/or landing. The additional ground clearance may also or alternatively be utilized to accommodate a larger outer diameter 170 for the propulsor rotor 66. Briefly, this outer diameter 170 may be measured as two times (2x) a radius extending from the respective propulsion system axis 54 to a respective one of the blade tips 80 (see FIG. 2). Moreover, by positioning the pylon-wing interface 150 laterally inboard between the aircraft fuselage 34 and the pylon-propulsion system interface 148, the first pylon structure 144A may be attached to the first aircraft wing 36A laterally closer to the aircraft fuselage 34 to decrease a corresponding moment arm. In turn, structural reinforcement within the first aircraft wing 36A may be reduced in span to reduce aircraft wing weight and/or overall size.

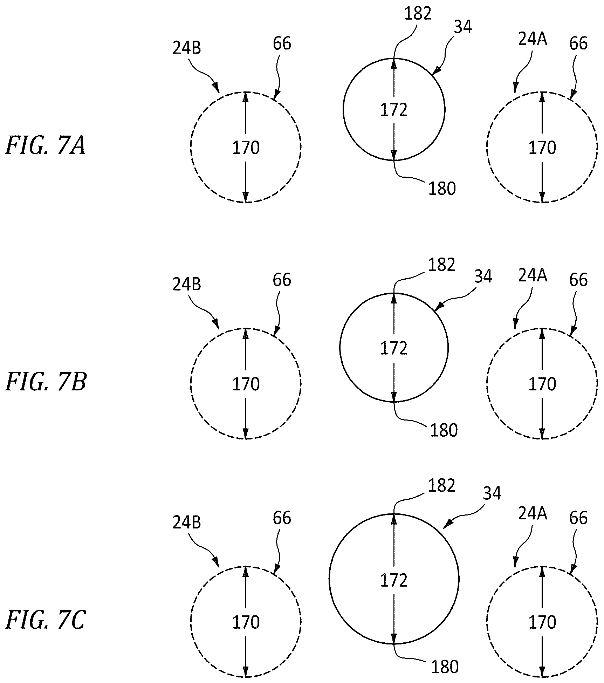

Referring to FIGS. 7A-C, the aircraft fuselage 34 has a vertical height 172 in a plane of rotation of the propulsor rotor 66; e.g., the plane of FIGS. 7A-C. Briefly, referring to FIG. 2, the plane of rotation is perpendicular to the respective propulsion system axis 54 and may include a common blade reference point 174 along each of the propulsor blades 74. Each blade reference point 174 may be disposed at a common span location along a leading edge 176 of the respective propulsor blade 74 (e.g., see FIG. 2), a trailing edge 178 of the respective propulsor blade 74, or at an intermediate location (e.g., a mid-point) along a mean line (e.g., a camber line) of the respective propulsor blade 74. Referring to FIGS. 7A-C, the vertical height 172 extends vertically diametrically across the aircraft fuselage 34 between vertically outermost points of a respective section of the aircraft fuselage 34; e.g., from a bottom-dead-center location 180 circumferentially about the fuselage section to a top-dead-center location 182 circumferentially about the fuselage section. In some embodiments, referring to FIG. 7A, the vertical height 172 may be sized less than the outer diameter 170. In other embodiments, referring to FIG. 7B, the vertical height 172 may be sized equal to the outer diameter 170. In still other embodiments, referring to FIG. 7C, the vertical height 172 may be sized greater than the outer diameter 170.

Referring to FIG. 2, each aircraft propulsion system 24 may be configured such that one or more of its propulsion system members 66 and/or 68 are arranged upstream of the respective pylon structure 144. The pylon structure 144 of FIG. 2, for example, is disposed axially along the respective propulsion system axis 54 between (a) the propulsion section 62 and its members 66 and 68 and (b) the respective aircraft wing 36 and its leading edge 50. The present invention, however, is not limited to such an exemplary arrangement. For example, the pylon structure 144 may partially axially overlap or project axially forward of the guide vane structure 68.

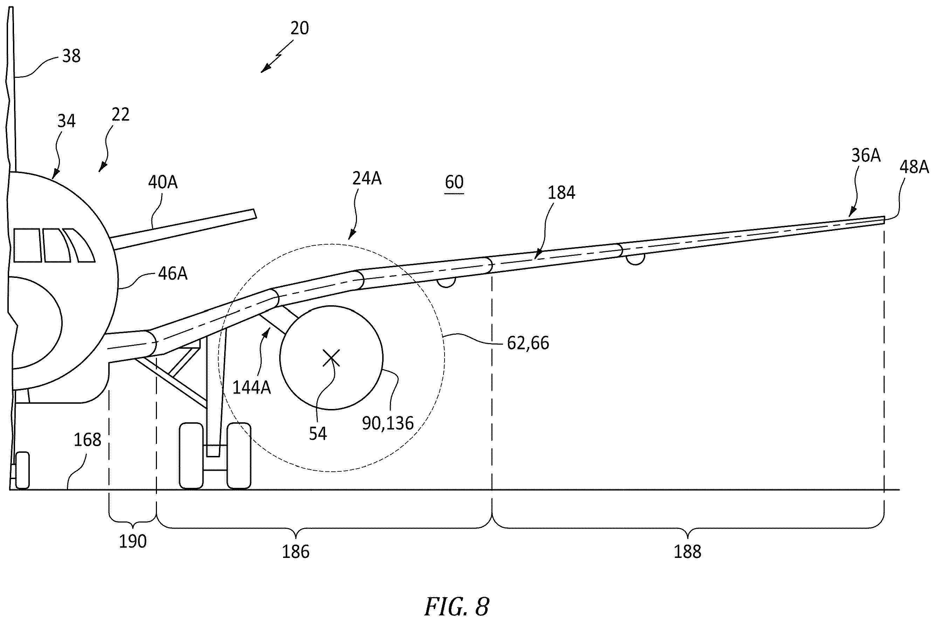

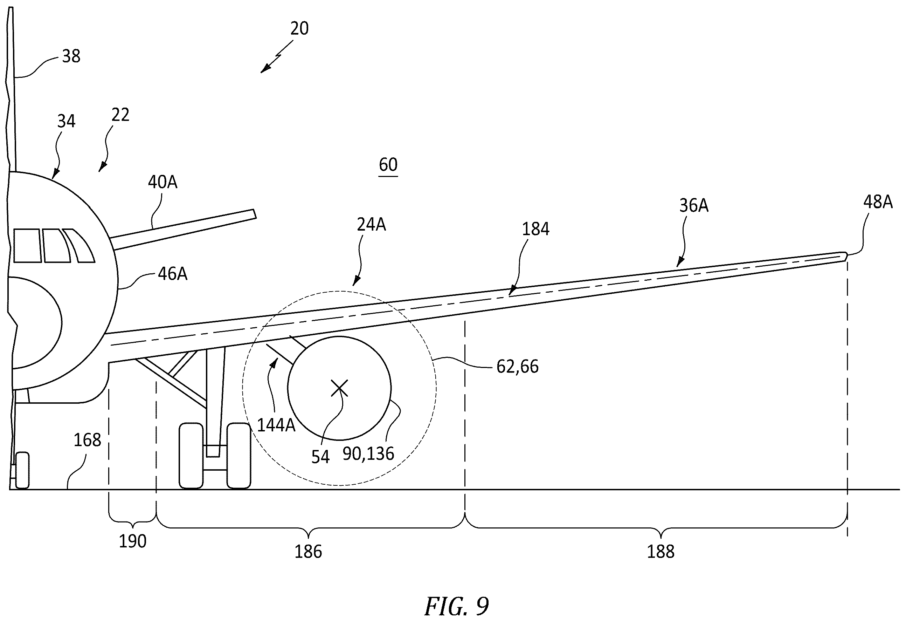

In some embodiments, referring to FIG. 8, each aircraft wing 36 may be configured as a gull wing. The first aircraft wing 36A of FIG. 8, for example, extends along a span line 184 from the aircraft fuselage 34 to its wing tip 48A. At least (or only) an intermediate spanwise section 186 of the first aircraft wing 36A and its span line 184 of FIG. 8 (e.g., proximate the aircraft fuselage 34) is non-straight (e.g., bent) in the reference plane; e.g., the plane of FIG. 8. This intermediate spanwise section 186 is provided to step an outboard section 188 of the first aircraft wing 36A vertically above an inboard section 190 of the first aircraft wing 36A. The intermediate spanwise section 186 may spanwise overlap the first aircraft propulsion system 24A and a partial or complete lateral extent of one or more of its members 62, 66 and/or 90. In other embodiments, referring to FIG. 9, each aircraft wing 36 and its span line 184 may be substantially straight. The intermediate spanwise section 186 of FIG. 9, for example, is straight in the reference plane; e.g., the plane of FIG. 9.

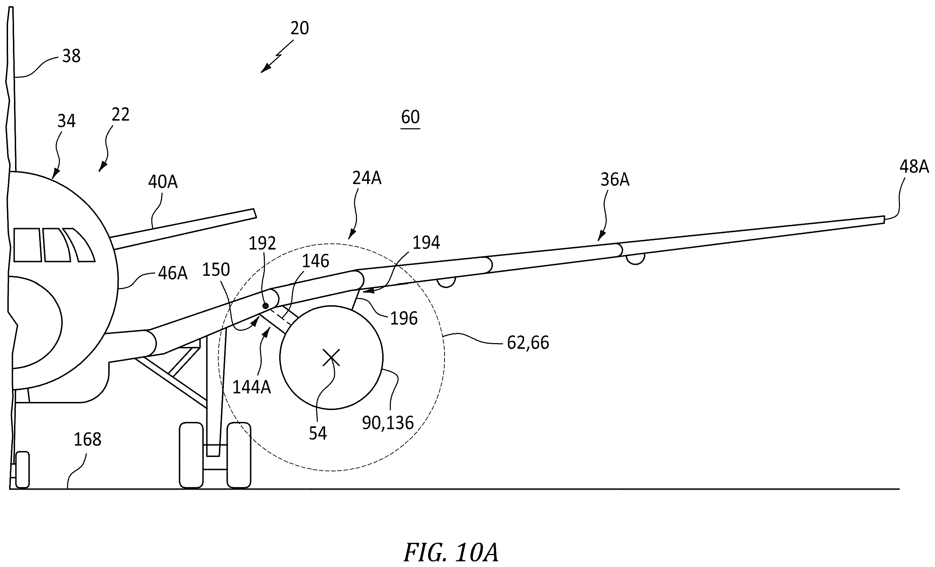

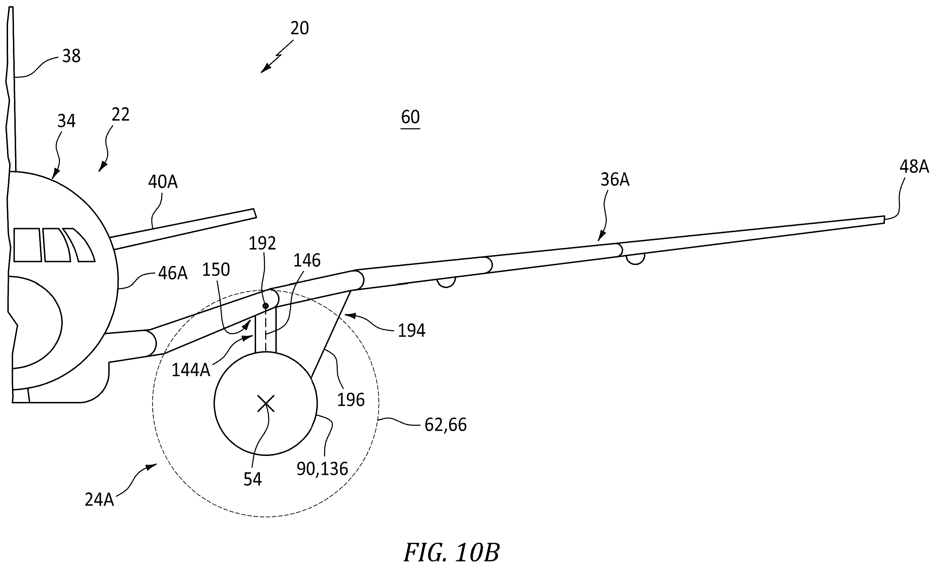

In some embodiments, referring to FIGS. 2, 4, 5, 8 and 9, each pylon structure 144 may be configured as a fixed structure. In other embodiments, referring to FIGS. 10A and 10B, each pylon structure 144 may alternatively be configured to move (e.g., pivot) between a first position of FIG. 10A (e.g., a stowed, angled position) and a second position of FIG. 10B (e.g., a deployed, vertical position). In the first position of FIG. 10A, each pylon structure 144 may be arranged as described above to facilitate aircraft operation on ground, aircraft takeoff and/or aircraft landing. To move to the second position of FIG. 10B, each pylon structure 144 may pivot about a pivot axis 192 at the pylon-wing interface 150 downward until the respective pylon centerline 146 is completely or approximately vertical. The respective aircraft propulsion system 24 may thereby be moved away from the respective aircraft wing 36 to improve propulsion system performance. To move the pylon structure 144 between the first position of FIG. 10A and the second position of FIG. 10B, each pylon structure 144 may be configured with a respective pylon actuation system 194 with at least one actuator 196 such as, but not limited to, a hydraulic, pneumatic or fueldraulic piston. While the actuator 196 is shown in FIGS. 10A and 10B as an external actuator, it is contemplated the actuator 196 may alternatively be configured internal within the respective aircraft wing 36 and/or the respective pylon structure 144. Moreover, while each aircraft propulsion system 24 is described above as pivoting about the respective pivot axis 192, the present invention is not limited to such exemplary movement. For example, it is contemplated each aircraft propulsion system 24 may also or alternatively translate in and out to move between its stowed position and its deployed position. Each pylon structure 144, for example, may be configured with a four-bar linkage to facilitate movement of the respective aircraft propulsion system 24.

The engine flowpath 108 of FIG. 2 extends longitudinally from the flowpath inlet 110, sequentially through the inlet section 102, the LPC section 103A, the HPC section 103B, the combustor section 104, the HPT section 105A, the LPT section 105B and the exhaust section 106, to the flowpath exhaust 112. The engine flowpath 108 of FIG. 2 is configured such that the core air and the combustion products generally flow in the aft, downstream direction towards the propulsion system aft end 58. The core air and the combustion products thereby flow along with the ambient air propelled by the rotating propulsor rotor 66 in a common axial direction - the downstream, aft direction. The turbine engine 64 of the present invention, however, is not limited to such an exemplary common flow engine arrangement. For example, the engine flowpath 108 may alternatively be configured such that the core air and the combustion products generally flow in a forward, upstream direction towards the propulsion system forward end 56. The core air and the combustion products may thereby flow in an opposite direction as the ambient air propelled by the rotating propulsor rotor 66. Here, the turbine engine 64 may have a reverse flow engine arrangement.

The aircraft propulsion system 24 of FIG. 2 and its propulsion section 62 are described above with a tractor configuration; e.g., where the propulsor rotor 66 is disposed at or otherwise near the propulsion system forward end 56. It is contemplated, however, the propulsion section 62 may alternatively be disposed at or otherwise near the propulsion system aft end 58 to provide a pusher fan configuration. Moreover, while the turbine engine 64 is described above with a particular two rotating structure arrangement, the present invention is not limited thereto. For example, the LPC rotor 116 may be omitted to configure the LPT rotor 119 as a power turbine (PT) rotor for the propulsor rotor 66. In another example, the turbine engine 64 may also include another rotating structure; e.g., an intermediate speed spool for the engine core 114.

The guide vane structure 68 is described above as a fixed (e.g., non-rotatable) guide vane structure. It is contemplated, however, the guide vane structure 68 may alternatively be selectively rotatable about the respective propulsion system axis 54. With such an arrangement, each aircraft propulsion system 24 may be configured as an open rotor propulsion system with a swirl recovery blade (SRB) open rotor architecture. More particularly, each aircraft propulsion system 24 may operate as: (A) a counter-rotating open rotor (CROR) propulsion system during a dual rotor mode of operation (e.g., when both the propulsor rotor 66 and the structure 68 are counter-rotating about the respective propulsion system axis 54); and (B) a single open rotor and swirl recovery vane (SRV) propulsion system during a single rotor mode of operation (e.g., when the propulsor rotor 66 is rotating and the structure 68 is rotationally fixed about the respective propulsion system axis 54). Note, when the guide vane structure 68 is configured to selectively rotate about the respective propulsion system axis 54, the moving guide vanes 86 operate as propulsor blades 74.

The aircraft propulsion system 24 of FIG. 2 and its propulsion section 62 are described as including the guide vane structure 68 with an SRV or SRB configuration. The present invention, however, is not limited to such an exemplary propulsion system configuration. For example, each aircraft propulsion system 24 may alternatively be configured without an open guide vane structure. Each aircraft propulsion system 24 may thereby be configured as a single rotor (SR) open rotor propulsion system. In another example, each aircraft propulsion system 24 may alternatively be configured with a set of the open propulsor rotors (e.g., counter-rotating propulsor rotors) operatively coupled to the turbine engine 64 (see FIG. 2) through the geartrain 132. Each aircraft propulsion system 24 may thereby be configured as a counter-rotating open rotor (CROR) propulsion system.

Though the aircraft propulsion systems 24 and the pylon structures 144 are described herein as being mounted to a respective one of the wings 36 of the aircraft 20, or a primary lift generating surface, the present invention is not limited to such an exemplary arrangement. Each pylon structure 144 and each aircraft propulsion system 24, for example, may alternatively be configured on a secondary lift surface, such as a substantially horizontal (e.g., within 5-10 degrees of horizontal) airfoil extending from the aircraft fuselage 34 forward of stabilizers 40, 38 and/or in lieu of at least one aircraft stabilizer; e.g., horizontal stabilizer 40.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A system for an aircraft (20), the system comprising:
an aircraft propulsion system (24) including a housing structure (90), an open propulsor rotor (66) and a turbine engine (64), the turbine engine (64) configured to drive rotation of the open propulsor rotor (66), and the turbine engine (64) comprising an engine centerline (54) and an engine core (114) that is housed within the housing structure (90); and
a pylon structure (144) mounted to the aircraft propulsion system (24) and projecting longitudinally along a pylon centerline (146) away from the aircraft propulsion system (24), the pylon centerline (146) circumferentially offset from a reference point (158) about the engine centerline (54) by a first offset angle (160), the reference point (158) disposed at a top-dead-center location (152) of the housing structure (90), and the first offset angle (160) comprising a non-zero acute angle.

2. The system of claim 1, wherein:
the first offset angle (160) is equal to or greater than ten degrees; and/or
the first offset angle (160) is equal to or less than seventy degrees.

3. The system of claim 1 or 2, wherein the first offset angle (160) is between twenty degrees and sixty degrees.

4. The system of any preceding claim, wherein:
the open propulsor rotor (66) is upstream of the pylon structure (144); and/or
the aircraft propulsion system (24) further includes an open guide vane structure (68) next to the open propulsor rotor (66).

5. The system of any preceding claim, further comprising:
an airframe component (36);
the pylon structure (144) mounting the aircraft propulsion system (24) to the airframe component (36).

6. The system of claim 5, wherein:
the airframe component (36) comprises an exterior surface (162);
the pylon structure (144) projects longitudinally along the pylon centerline (146) to the exterior surface (162) at an interface between the pylon structure (144) and the airframe component (36);
the pylon centerline (146) is angularly offset from the exterior surface (162) at the interface by a second offset angle (164) in a reference plane perpendicular to the engine centerline (54); and
the second offset angle (164) is a non-zero acute angle.

7. The system of claim 6, wherein the second offset angle (164) is between ten degrees and seventy degrees.

8. The system of any of claims 5 to 7, wherein the engine core (114) is disposed vertically below the airframe component (36) relative to a vertically extending yaw axis (30) of the aircraft (20).

9. The system of any of claims 5 to 8, wherein the airframe component (36) is configured as an aircraft wing, wherein, optionally, the aircraft wing (36) comprises a gull wing.

10. The system of claim 9, wherein a section (186) of a span line (184) of the aircraft wing (36) overlaps the aircraft propulsion system (24), and wherein:
the section (186) of the span line (184) of the aircraft wing (36) is straight in a reference plane perpendicular to the engine centerline (54); or
at least a portion of the section (186) of the span line (184) of the aircraft wing (36) is non-straight in a reference plane perpendicular to the engine centerline (54).

11. The system of claim 9 or 10, further comprising:
an aircraft fuselage (34) having a vertical height (172) in a plane of rotation of the open propulsor rotor (66);
the aircraft wing (36) connected to and projecting spanwise out from a lateral side (46) of the aircraft fuselage (34); and
the open propulsor rotor (66) having an outer diameter (170) that is equal to or greater than the vertical height (172).

12. An aircraft system, comprising:
an aircraft airframe (22) comprising a roll axis (26), a pitch axis (28), a yaw axis (30) and an aircraft wing (36A);
an aircraft propulsion system (24) including an open propulsor rotor (66) and a turbine engine (64), the turbine engine (64) comprising an engine centerline (54) and configured to drive rotation of the open propulsor rotor (66); and
a pylon structure (144) mounting the aircraft propulsion system (24) to the aircraft wing (36), the pylon structure (144) extending longitudinally along a pylon centerline (146) from the aircraft propulsion system (24) to the aircraft wing (36), the pylon centerline (146) angularly offset from the yaw axis (30) by a first offset angle (166) in a reference plane perpendicular to the engine centerline (54), and the first offset angle (166) greater than ten degrees and less than ninety degrees.

13. The aircraft system of claim 12, wherein:
the first offset angle (166) is equal to or greater than twenty degrees; and/or
the first offset angle (166) is equal to or less than sixty degrees.

14. The aircraft system of claim 12 or 13, wherein:
the pylon structure (144) is configured to pivot between a first position and a second position; and
the pylon centerline (146) is angularly offset from the yaw axis (30) by the first offset angle (166) when the pylon structure (144) is in the first position.

15. An aircraft system, comprising:
an aircraft airframe (22) comprising an aircraft wing (36) with an exterior surface (162);
an aircraft propulsion system (24) including an open propulsor rotor (66) and a turbine engine (64), the turbine engine (64) comprising an engine centerline (54), and the turbine engine (64) configured to drive rotation of the open propulsor rotor (66); and
a pylon structure (144) mounting the aircraft propulsion system (24) to the aircraft wing (36), the pylon structure (144) extending longitudinally along a pylon centerline (146) from the aircraft propulsion system (24) to the exterior surface (162) at an interface between the pylon structure (144) and the aircraft wing (36), the pylon centerline (146) angularly offset from the exterior surface (162) at the interface by a first offset angle (164) in a reference plane perpendicular to the engine centerline (54), and the first offset angle (164) greater than five degrees and less than ninety degrees.
